(19) **Europäisches Patentamt / European Patent Office / Office européen des brevets**

(11) **EP 4 741 900 A1**

(12) # EUROPEAN PATENT APPLICATION

(43) Date of publication:
**13.05.2026 Bulletin 2026/20**

(21) Application number: **25212659.4**

(22) Date of filing: **31.10.2025**

(51) International Patent Classification (IPC):
**G02B 6/44** (2006.01)

(52) Cooperative Patent Classification (CPC):
**G02B 6/4472; H04L 49/1507; G02B 6/441**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.11.2024 US 202418943029**

(71) Applicant: **Panduit Corp.**
**Tinley Park, Illinois 60487 (US)**

(72) Inventors:
- **CASTRO, Jose M.**
  **Tinley Park, 60487 (US)**
- **SEDOR, Thomas M.**
  **Tinley Park, 60487 (US)**
- **KOSE, Bulent**
  **Tinley Park, 60487 (US)**
- **BERRIDGE, Benjamin J.**
  **Tinley Park, 60487 (US)**
- **HIBNER, Max W.**
  **Tinley Park, 60487 (US)**
- **HUANG, Yu**
  **Tinley Park, 60487 (US)**
- **KELLY, Brian L.**
  **Tinley Park, 60487 (US)**
- **REID, Robert A.**
  **Tinley Park, 60487 (US)**

(74) Representative: **Roberts, Gwilym Vaughan et al**
**Kilburn & Strode LLP**
**Lacon London**
**84 Theobalds Road**
**London WC1X 8NL (GB)**

(54) **OPTICAL INTERCONNECTION CABLE WITH EMBEDDED NETWORK TOPOLOGY**

(57)   An optical cable comprising a plurality of multi-fiber connectors or adapters wherein the connectors or adapters are configured to connect to network equipment in a data communications network and wherein the optical cable is configured to map near end to far end multi-fiber ports following specific network topologies whereby fiber groups are rearranged in a transition zone of the optical cable such that each of all fibers within one sub-jacketed group at the near end is routed to multiple independent subjacketed groups at the far end, such that a light path of connected transmitters and receivers are matched to provide optical connections from transmitting fibers to receiving fibers.

Fig. 3

EP 4 741 900 A1

## Description

### FIELD

The present disclosure relates to data center optical networks and in particular, to methods and apparatus for fast deployment of optical fabrics for hyperscale or Artificial Intelligence (AI) data center networks.

### BACKGROUND

Traditional enterprise and cloud data centers already utilize distributed computing among hundreds to thousands of servers to run customers' applications. However, for those traditional applications, distributed computing is often geared towards improving the availability, reliability, and scalability of enterprise applications such as web services including streaming, social media, file storage, and email servers, among others. Although the requirements of bandwidth and latency are important for traditional applications, they cannot compare with AI Machine Learning (AI/ML) requirements. AI/ML networks necessitate immense bandwidth and low-latency requirements to handle the processing of complex algorithms to understand, learn, and make predictions using massive datasets.

State-of-the-art and future systems for training or inference of advanced generative AI/ML models require very high bandwidth interconnections low (tail) latency, and fabric topologies that enable full connectivity among accelerators (GPUs, TPUs, or other accelerators). AI/ML systems use a specialized network, called the back-end network, typically consisting of Infiniband (IB) links, for computing. Ethernet connections are utilized for the front-end (traditional) network.

Today, the back-end of most of those AI/ML systems uses a large number of short-distance (multi-fiber connector/adapter) interconnections. Typically, topologies used in AI/ML networks are Spine/Leaf or rail-optimized fabrics to interconnect the nodes to switches or for switch-to-switch interconnections. Other topologies, used for traditional HPC such as Torus, Hypercube, Dragonfly, and Slim Fly among others, are being investigated.

The high capital and operational cost of state-of-the-art AI/ML systems require reducing the deployment time of dense and highly reliable optical channels. This is challenging, using current infrastructure deployment methods.

In this document, we disclose a novel type of optical fiber cable with an embedded interconnection structure that reduces the need for patch panels, and the number of mating interfaces to implement a desired network topology.

### SUMMARY

An optical cable comprising a plurality of Nu subjacketed units at a near end of the cable and a plurality of Nu' subjacketed units at a far-end of the cable, wherein the units contain Ng fiber groups terminated with optical connectors at the near end, and Ng' fiber groups terminated with optical connectors at the far end, wherein each fiber group has a number of fibers Nf at the near end and a number of fibers Nf' at the far end, wherein a variable structure, located in a transition zone or distributed along the cable, interconnects units from the near end and far end of the cable, interchanging the location of fiber groups among several units, wherein the number of units, fiber groups and fibers follow the relationship Nu x Ng x Nf = Nu' x Ng' x Nf', and at least 75% of the near-end and far-end units share at least one fiber group, such that the variable interconnections follows design that intends to incorporate a desired optical fabric topology that simplifies the network deployment and reduce losses.

In some implementations, Nf'=Nf.

### BRIEF DESCRIPTION OF THE DRAWINGS

Fig. 1A shows a traditional breakout/sub-unitized cable cross-section viewed from one side, the near end of the cable.

Fig. 1B shows a traditional breakout/sub-unitized cable cross-section viewed from the far end of the cable.

Fig. 1C shows the cross-section viewed from the near end of the cable of CableMesh 200.

Fig. 1D shows the cross-section viewed from the far end of the cable of CableMesh 200.

Fig. 2A shows a representation of optical cables in a 2D coordinate system where the horizontal axis includes the near-end units' labels and the vertical axis includes the far-end units' labels where a traditional breakout cable only connects one unit from the near to the far end using 8 fiber groups in this example

Fig. 2B shows a representation of optical cables in a 2D coordinate system where the horizontal axis includes the near-end units' labels and the vertical axis includes the far-end units' labels where CableMesh connects all units from the near end to all units of the far end, using one fiber group (label shown in the figure) maximizing interconnection metric, M.

Fig. 3 shows CableMesh **200** with near end and far end configuration shown in Figs. 1A-1D and Table 1.

Fig. 4A shows a Network topology for 8 Leaf and 4 Spine switches.

Fig. 4B shows partial implementation with a CableMesh **200** (shown in Figs. 1A-1D and Figs. 2A and 2B).

Fig. 5A shows a cross-section of CableMesh, embodiment **400** at the near end of the cable.

Fig. 5B shows a cross-section of CableMesh at the far end of the cable.

Fig. 5C shows the physical representation of the cable shown in Figs. 5A and 5B.

Fig. 6A shows a cross-section of CableMesh, embodiment **500** at the near end of the cable.

Fig. 6B shows a cross-section of CableMesh embodiment **500** and the far end of the cable.

Fig. 6C shows the physical representation of the cable shown in Figs. 6A and 6B.

Fig. 7A shows the AI/ML Mesh for 32 computing Nodes, each with 8 optical ports.

Fig. 7B further shows the AI/ML Mesh for 32 computing Nodes, each with 8 optical ports.

Fig. 8A shows the section of the AI/ML Mesh shown in Fig. 6A with logical representation of the interconnections from four nodes of rack 1 to eight leaf switches

Fig. 8B shows the physical representation of the same network using CableMesh **200.**

Fig. 9A shows the network topology for 8 leaf and 8 spine switches

Fig. 9B shows the partial implementation of Fig. 9A with a CableMesh **500**

Fig. 10A shows a variant of CableMesh **500** for multi-rack deployment with a deployed cable (for example, in a cable routing system above the racks) with its units not detached

Fig. 10B shows the same deployed cable with units detached from the main body of the cable.

Fig. 11 shows Table 1, a tabular representation of CableMesh 200 showing how the fiber groups are rearranged from the near end to the far end to create the desired mesh/interconnection within the cable assembly.

Fig. 12 shows Table 2, a tabular representation of CableMesh **400** showing how the fiber groups are rearranged from the near end to the far end to create the desired mesh/interconnection within the cable assembly.

Fig. 13 shows Table 3, a tabular representation of CableMesh **500** showing how the fiber groups are rearranged from the near end to the far end to create the desired mesh/interconnection within the cable assembly.

## DESCRIPTION

Fiber optics cables, widely deployed in data center networks, can be classified as distribution (trunks), patch cords (jumpers/interconnects), or breakout (fan-out/sub-unitized) cables. Distribution cables have one outer jacket layer for protection, making them easy to install, and terminate whereas, breakout cables contain several units of optical fibers enclosed in an outer jacket. Each unit is individually reinforced, making it easy to separate them from the cable.

Here we disclose embodiments of a new type of cable, a factory-terminated cable that fully or partially incorporates the desired topology of the network. This cable type, named here CableMesh, reduces the deployment time of the network while decreasing the number of components (cost), reducing losses, and potential points of failure due to contaminated or damaged connectors.

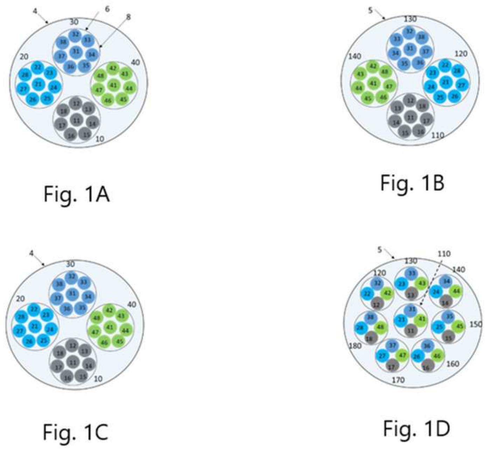

Figs 1A and 1B illustrate a cross-section view of a traditional breakout cable is shown. The overall jacket and other cable strength elements needed to construct the cable are not shown in the figure. Fig. 1A shows the core cross-section, **4,** of a traditional breakout cable observed from one cable end, the near-end in this example. The core cross-section of the other end of the cable, the far end, is labeled as **5** in this example. This breakout cable shows four units, **6,** at the near end. Each unit is surrounded by element **8,** which could consist of tapes, jackets, or other elements used to identify the unit. Here we use the general term, "subjacket" to represent element **8,** and when referring to a unit, we may use the term "subjacketed" unit. The nomenclature for the unit at the near-end side and far-end side is given by $U$ and $U'$ respectively. It should be noted that the terms near and far used in this disclosure are arbitrary and necessary only to indicate one beginning and end of the cable.

We also use $Nu$ and $Nu'$ to represent the number of units at the near and the far end, respectively. For a traditional breakout cable, $Nu=Nu'$. In Figs. 1A and 1B, $Nu=Nu'=4,$ and the units are labeled as **10, 20, 30,** and **40.**

Each unit contains $Ng$ fiber groups (G) at one end, the near end, and $Ng'$ at the far end. In a traditional breakout cable, $Ng=Ng'$. In this example, $Ng=Ng'=8,$ and the fiber groups inside the first unit, unit **10** are labeled as **11, 12, 13, 14, 15, 16, 17,** and **18.** Using a similar labeling method, the fiber groups inside unit **40** are labeled as **41, 42, 43, 44, 45, 46, 47,** and **48.**

A group of fibers consists of a group of $Nf$ fibers, where the fibers are grouped into tight-buffered fibers, grouped in loose tube fibers, or ribbons (flat or rollable). As mentioned, in traditional breakout cables, $Nu=Nu'$ and $Ng=Ng'$ and the organization of fiber groups inside the units remain fixed along the cable. For example, the near and far end units **10** and **110** respectively contain the same fiber groups, labeled **11, 12, 13, 14, 15, 16, 17,** and **18.** Therefore, light propagating in all the fibers inside unit **10,** group **11,** remains in the same unit **110** group **11.**

Figs. 1C and 1D shows the near and far end cross-section of one type of the disclosed CableMesh. At its near-end cross-section $Nu=4$ and $Ng=8,$ whereas from the far-end, $Nu'=8$ and $Ng'=4.$ Therefore, in this CableMesh example, $Nu{\neq}Nu'$ and $Ng{\neq}Ng'$ which is different from traditional cables. Moreover, the layout of fiber groups inside the units is different at the near and far end. For example, the fiber group **12** which belongs to unit **10** at the near end of the CableMesh (see Fig. 1C), becomes part of unit **120** at the far end (see Fig. 1D). This CableMesh property implies not only changes in the location of the fiber groups but also changes in neighboring groups inside the unit. Following the same example, the fiber group neighbors of fiber group **12** in unit **10** are **11, 13, 14, 15, 16, 17,** and **18** at the near end of the cable.

However, at the far end of the cable, the fiber group neighbors of fiber group **12** in unit **10** are **22, 32,** and **42.**

These CableMesh features, with the described layout changes shown in Figs. 1C and 1D, are useful for almost lossless and simpler implementation of network topologies inside the cable, as shown in this application.

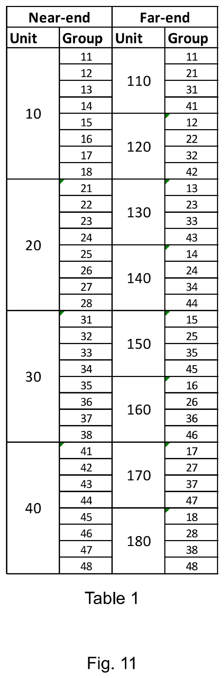

In general, the CableMesh types follow the relationship, $Nu \times Ng \times Nf = Nu' \times Ng' \times Nf'$, and follow a specific interconnection map between units of fiber groups from the near end to the far end of the cable (see for example Fig. 11, Table 1). For the sake of simplicity, in this disclosure, we assume $Nf=Nf'$, which enables straightforward relationships between cable units and groups to the network topology. Also, in this disclosure there is not shuffle or mixing between the $Nf$ fibers of each fiber group.

To quantify the differences between CableMesh and traditional cables, we represent each fiber group within the cable in a 2D coordinate system defined by the $U$ and $U'$ axes. For example, the $i^{th}$ fiber group, $Gi$, could be represented by a vector $(Ui, Ui')$, where $Ui$ and $Ui'$ represent the near and far end units that contain the fiber group. Using this terminology, we can determine the degree of connectivity between near-end and far-end using a cable interconnection metric, $M$, given by,

$$M = 100 \frac{\sum_{i=1}^{N} C_{Ui,Ui\prime}}{N}\ \%$$

where $N$ is the total number of fiber groups, $N=Nu \times Ng= Nu' \times Ng'$ and $C_{Ui,Ui\prime}$ is a connectivity matrix, which elements can that take a value of 1 if units $Ui$ and $Ui'$ share at least one fiber group, and zero if they do not share any fiber group. In the context of this disclosure, the units that share at least one fiber group are labeled as connected units.

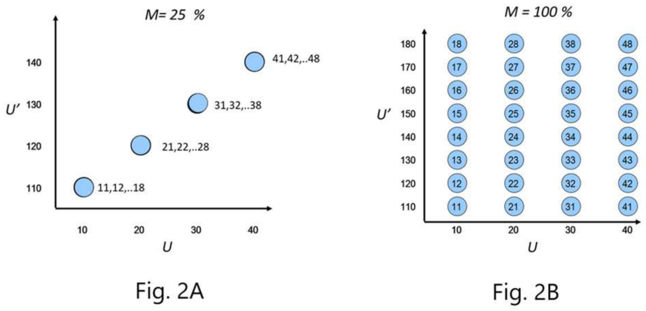

Figs. 2A and 2B show the differences between the traditional breakout cables and the CableMesh based on defined metrics. In Fig. 2A the traditional cable units from the near-end side connect to only one unit from the far-end side. The connection utilizes the 8 fiber groups that each unit contains achieving $M=25\ \%$. In Fig. 2B the CableMesh units from the near-end side connect to all the units of the far-end side achieving $M=100\%$ and each connection between units consists of only one fiber group.

Figs. 2A and 2B shows a representation of optical cables in a 2D coordinate system where the horizontal axis includes the near-end units' labels and the vertical axis includes the far-end units' labels wherein (Fig. 2A) a traditional breakout cable only connects one unit from the near to the far end using 8 fiber groups in this example or (Fig. 2B) CableMesh connects all units from the near end to all units of the far end, using one fiber group (label shown in the figure) maximizing interconnection metric, $M$.

The CableMesh features, enable the implementation of a factory-terminated cable, with embedded fabric topology and length customized to the client's networks This facilitates deployment while providing high-performance connectivity (i.e., low insertion loss and high return loss). For example, in the case of Spine/Leaf networks, $Nu$ can be designed to be proportional to the number of Spine switches, whereas $Nu'$ can be designed to be proportional to the number of Leaf switches.

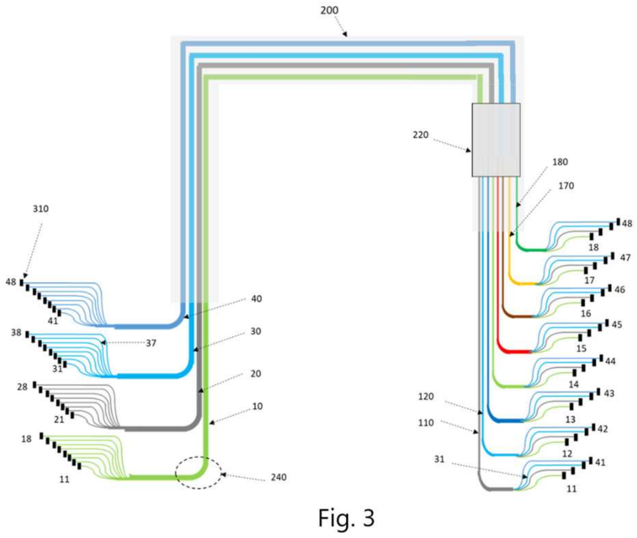

The structure of CableMesh types shown in Figs. 3, Figs. 5A-5C, and Figs. 6A-6C comprises $Nu \times Ng$ fiber groups using single mode, multimode, or another fiber selected by customers. The cable is factory terminated with simplex, duplex, or multi-fiber connectors or adapters at one or both sides of the cable (the near and far end) depending on customer requirements. The connectors/adapters such as multifiber MPO/MTP, SN-MT, MMC, or discrete fiber LC, SC, SN, MDC, or CS are tested in the factory to evaluate losses and reflection and therefore ensure optimal performance. The $Nu$ units, each with $Ng$ groups of fibers using traditional cabling and jacketing techniques, as required by customers.

The CableMesh features (e.g., topology, type, and/or number of fibers/connectors) and the length of each unit or fiber group can be designed to meet customer specifications. Regarding the length, the customer specifications might include the length difference, $\Delta L$ between the units or groups of the cable which facilitates the deployment and cable management. For example, in Figs. 1A-1D, from the near end of the cable, unit **20** and unit **30,** the length difference could be specified as $\Delta L = 1.5$ inches to facilitate the connections to the switch or server ports. On the other hand, from the far end of the cable, unit **120** and unit **130** could have $\Delta L = 2\ rack\ units$ (RU) [3.5 inches / 88.90mm], to connect neighboring switches in the same rack. The network's topology can be represented in a table, e.g., Table 1 for Figs. 1C and 1D, to map input to output ports.

A diagram of a CableMesh **200** (with cross-section shown in Figs. 1C and 1D and the interconnection map between fiber groups and units shown in Fig. 11, Table 1), is shown in Fig. 3. The left side of the figure shows the near-end side of the cable consisting of $Nu=4$ units with $Ng=8$ fiber groups each. In this figure, **10** represents a cable unit and labels **11** to **18** its fiber groups at the near-end. The right side of the figure shows the far-end side of the cable consisting of $Nu=8$ units with $Ng=4$ fiber groups each. In this figure, **110** represents a cable unit and labels **11, 21, 31,** and **41 of** its fiber groups at the far end. As previously described, the units of the near and far ends are interconnected following a desired topology, e.g., Table 1. The mapping between fiber groups from the near end to the far end of the cable occurs in a transition zone **220** inside the CableMesh. The location of the transition zone **220** where units and groups are rearranged, depends on customer requirements. It should be noted that the transition does not need to be located in a specific zone but distributed along the cable length as long as it produces a desired topology.

The fiber groups of the CableMesh are factory-terminated with multifiber MTP/MPO, SN-MT, or MMC connectors, labeled as **310.** Each of the multifiber connectors can have $Nf=8, 12, 16, 24, or 32$ fibers.

Each cable unit is surrounded by a jacket, tubing, hook and loop, tape elements, or braided sleeve that serve to protect or identify the fiber units as described previously. The fiber groups can have a jacket or tape for the same purpose. In Fig. 3, label **240** represents an element wrapped around the cable fiber group or unit, e.g., a reinforced polymer, that supports and controls its bending to specific radius or curvatures.

The cable uses bar codes, quick response (QR) codes, color markers, or other means to identify the units/groups at both ends uniquely. A method for labeling has been described in (Rapid ID patents US20230333952A1 and US20230401400A1). By combining the interconnection map information of multiple CableMesh given by the unit/group labels and the switch ports where each cable fiber group is connected at the near and far end, a simple algorithm can provide an interconnection map of the switching ports.

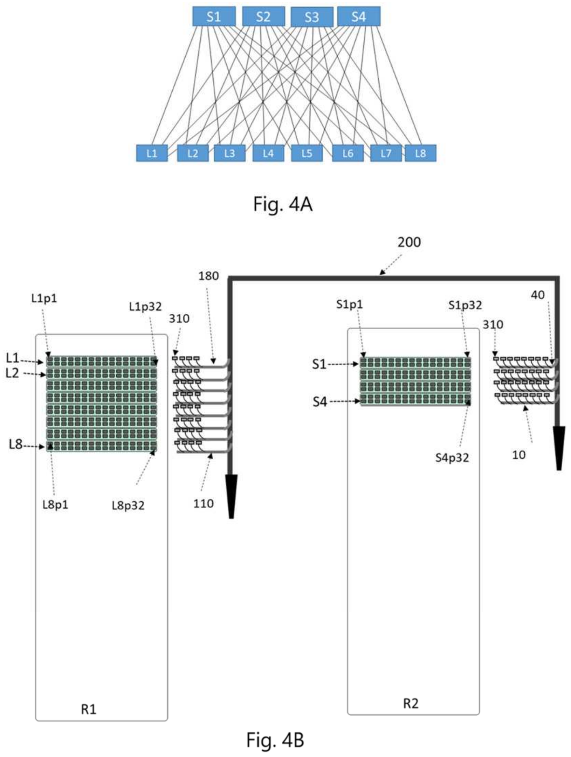

The CableMesh **200** incorporates a topology that could be used to connect servers to Leaf switches, *L,* or Leaf to Spine switches, *S.* For example, a fabric topology that connects eight Leaf switches *L1* to *L8* to four Spine switches, *S1* to *S4,* is shown in Fig. 4A.

Fig. 4B shows a partial view of the physical topology of the same network, where rack *R1* contains the eight Leaf switches, and rack *R2* contains the four Spine switches. In this example, each Leaf switch is equipped with 32 optical ports, half of which-16 ports-are utilized as uplinks connecting to the Spine switches. Note that this configuration achieves a 1:1 oversubscription ratio, which is commonly used in AI/ML back-end networks. The figure shows that one CableMesh **200** can connect four ports of each of the eight Leaf switches to eight ports of each of the Spine switches. By using four CableMesh **200,** it is possible to connect the 16 uplink ports of the Leaf switches to the 32 ports of each of the Spine switches.

In the network shown in Figs. 4A and 4B, all the fiber groups of a unit of a CableMesh **200** connect to a specific switch. producing well-ordered horizontally aligned connections among the switch ports. For example, on the Leaf side, unit **180** of CableMesh **200** can connect to the first four ports, *L1p1 to L1p4,* of Leaf 1. Similarly, unit **110** can connect to the first four ports, *L1p1 to L1p4,* of Leaf 8.

On the Spine side, unit **40** of CableMesh 200 can connect to the first eight ports, *S1p1 to S1p8,* of Spine1. Similarly, unit **10** can connect to the first eight ports, *S1p1 to S1p8,* of Spine 1. Those direct horizontally aligned connections already implement the logical topology shown in Fig. 4A. There is no need to utilize a patch panel to implement the topology, there is no need to transpose connection in any of the switches.

Note that since the units and fiber groups are already meshed (fully connected), misplacing units does not produce errors in the network. For example, we can assign unit **180** to *L2* instead of *L1* without producing a network failure.

Therefore, using CableMesh **200,** the full installation is simplified, there is no need to spend time during installation finding the correct interconnection ports since the cables already incorporate the network topology. Therefore, a well-organized port-to-port interconnection among switches, simpler to deploy can be achieved.

Note that to produce the same network with a traditional breakout cable, the installer will need to identify the corresponding fiber groups at each end of the cable and manually implement the network topology. A network such as Spine-and-Leaf most likely requires transposing the fiber groups either at the Leaf or Spine side. The transposition results in a disorganized layout of cables, which could obstruct airflow, and make it difficult to maintain.

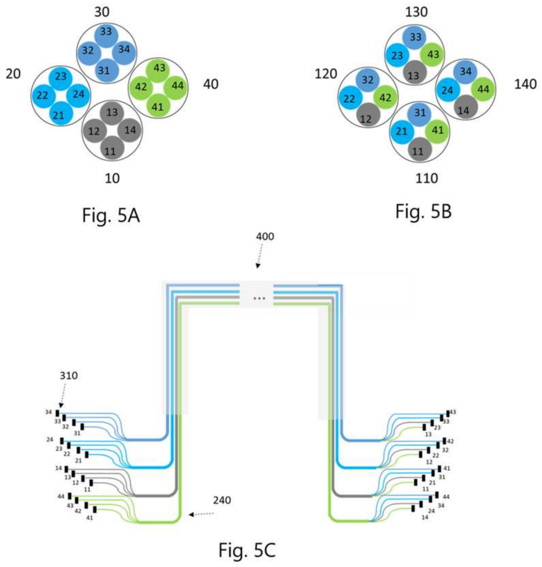

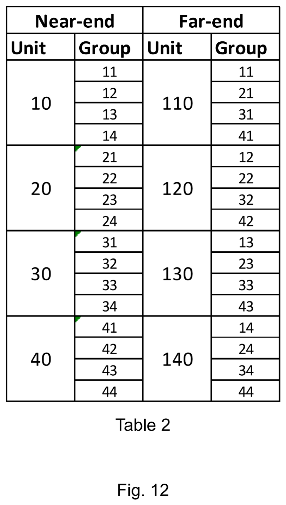

Figs. 5A-5C, shows an example of CableMesh **400** cross-section views from the near and far end and physical implementation. In this example, CableMesh **400** has $Nu=Nu'=4, and Ng=Ng'=4,$ where the layout of the fiber groups from the near and far end is substantially different. Table 2 describes the mapping from near to far end fiber groups. As shown in Figs. 5A-5C and Table 2 (Fig. 12), near and far end units are connected by at least one fiber group. For example, unit **30** (near end) and units **110, 120, 130,** and **140** (far end) are connected by fiber groups **11, 22, 33,** and **44,** respectively. Similarly, unit **110** (far end) is connected to units **10, 20, 30,** and **40** (near end) by fiber groups **11, 21, 31,** and **41,** respectively. The pattern of interconnecting all units of one end of the cable to all other units of the other side resembles the CLOS fabrics like the Spine/Leaf network. Therefore, assigning units to different switches as shown previously, without the need to select and map the topology, greatly facilitates the deployment of the network.

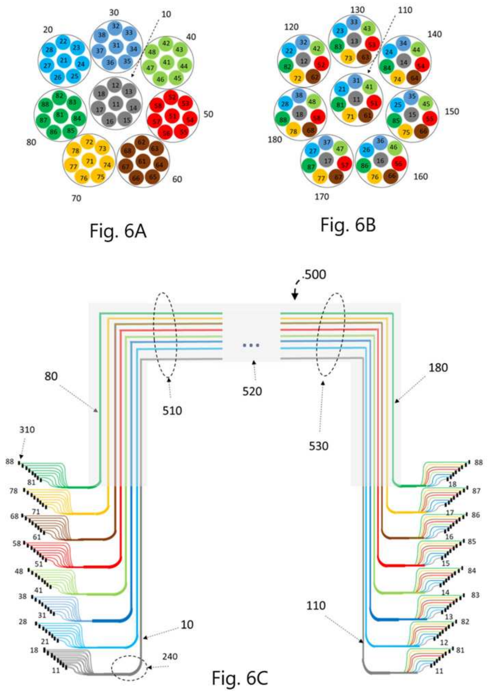

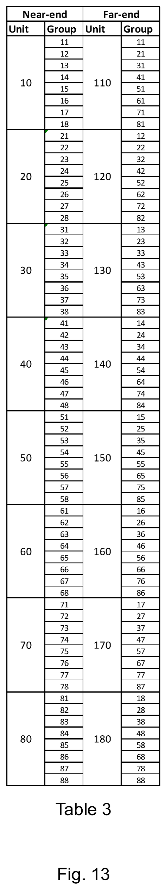

Another example of fabrics where the number of Spine switches and Leaf switches is in multiples of 8 is shown in Figs. 6A-6C. This embodiment, CableMesh **500,** with $Nu=Nu'=8, and Ng=Ng'=8$ incorporates a CLOS topology that can connect $8 \times k1$ Spines with $8 \times k2$ Leaf switches, where $k1$ and $k2$ are an integer positive numbers. For example, a fabric with 8 Spine and 128 Leaf switches. The mapping between near and far end fiber groups is shown in Table 3 (Fig. 13). The disclosed cables can help to deploy AI networks faster, minimizing connection errors and reducing losses. Some examples are described below.

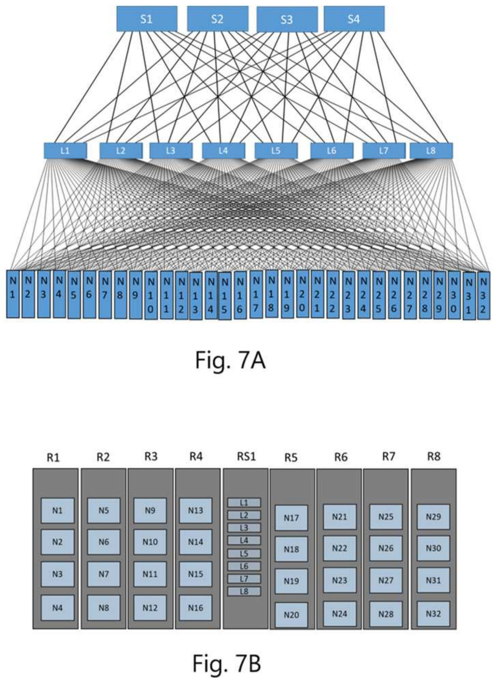

Figs. 7A and 7B shows a typical AI/ML cluster with 32 NVIDIA DGX 100 (or DGX 200) servers. In this example, each server, labeled as nodes, *N1* to *N32* is deployed in eight racks. Each node has eight MPO-8 optical ports, providing 400G of aggregated bandwidth per MPO-8 port. The nodes connect to eight Leaf switches (with equivalent 64 ports at 400G) and each Leaf switch connects to four Spine switches. The connection between the Leaf and Spine switches is similar to the ones described above and therefore we focus on the node-to-Leaf connections as shown in Figa. 8A and 8B.

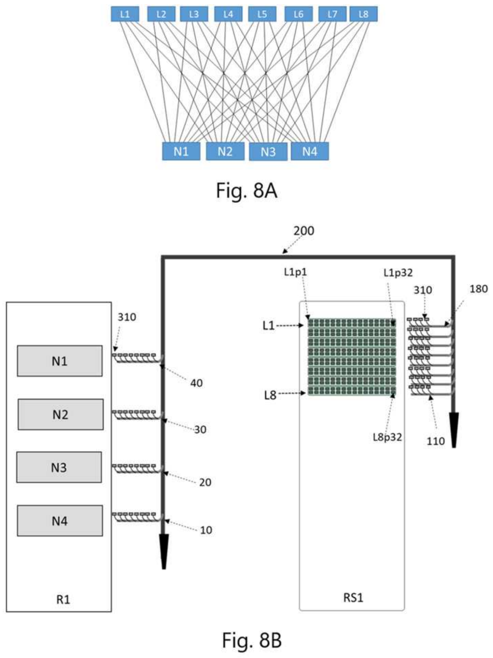

Fig. 8A shows the logical topology used to connect 4 nodes, *N1* to *N4* to the eight Leaf switches. Fig. 8B shows that using one CableMesh **200,** the eight ports of the nodes of one rack can be connected to 4 ports of each Leaf switch. For example, the eight fiber groups of unit **10,** connect to *N4,* and the fiber groups of unit **40** connect to *N1.* On the Leaf switch side, unit **110** connects to four ports of *L8,* and unit **180** connects to *L1.* There is no need for patching or transposing connections among nodes or switches. Therefore, to implement the complete network, eight CableMesh **200** can be used, providing essentially near-zero connection losses (connectors couple directly to transceivers), and simplifying implementation.

We described the connection among all the compute nodes of rack 1, *R1* to all the switches in rack *RS1.* We can apply a similar cable type and method to connect the other seven racks, *R2* through *R8,* to the switches in *RS1.* However, it should be noted, that while all the utilized CableMesh in this example incorporates identically logical topology, the cable lengths, and breakout distances, $\Delta L,$ may vary due to the different spacing between racks. Therefore, implementing CableMesh technology requires detailed information on the network including both logical and physical topology. This information can be provided by the customers. In other cases, such as AI/ML networks with well-documented configurations, such as NVIDIA DXG or HGX 100 or 200, and others, the cable lengths and breakout distances, could be determined by AI/ML system vendors.

An alternative method can use a CableMesh **200** or other CableMesh type as defined in this disclosure, of a fixed length that is connected to a traditional break-out cable of variable length. In that case, CableMesh of fixed length provides fiber mapping for different fiber groups (ports), while the traditional breakout accommodates the required variable lengths. Although this configuration introduces an additional connection interface, it remains simpler than using a patch panel, which requires complex port mapping to deploy the fabric topology. Additionally, using a patch panel to implement the fabric would require two interconnection points, increasing connector losses.

Another alternative method can use a CableMesh **200** or other CableMesh type as defined in this disclosure, of a fixed length embedded in the cabling systems providing the required mesh without occupying rack space. In this method, a crew can install equipment and traditional cables to a transition point, the CableMesh of fixed length will be connected greatly simplifying the installation. For example, a small piece of CableMesh can be connected to traditional cables already installed in a cable routing system.

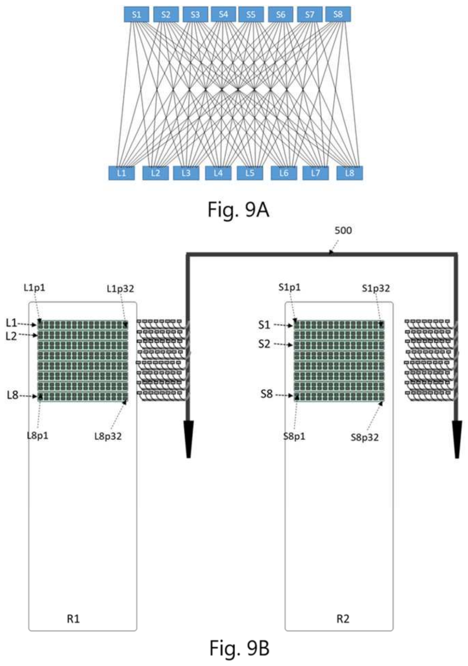

Fig. 9A shows another example, of a topology using eight Leaf switches, *L1* to *L8* connected eight Spine switches, *S1* to *S8.* Fig. 9B shows a partial view of the physical topology of the same network, where rack *R1* contains eight Leaf switches, and rack R2 contains eight Spine switches. In this example, each Leaf switch has 16 uplinks that connect to the ports of the Spine switches. The figure shows that one CableMesh **500,** can connect eight ports of each of the eight Leaf switches to eight ports of the Spine switches providing the desired Spine/Leaf topology. As previously described, those port-to-port connections are horizontally aligned to the Leaf switch ports on one end of the cable, and also horizontally aligned to the Spine switches at the other end. This avoids the need to transpose connections to incorporate the topology. Therefore, a clean port interconnection is obtained without patch panels or additional connection interfaces can be obtained.

Previously it was shown the application of the CableMesh connecting switches or servers located in two different racks. Using these methods, we need several cables to implement the full fabric.

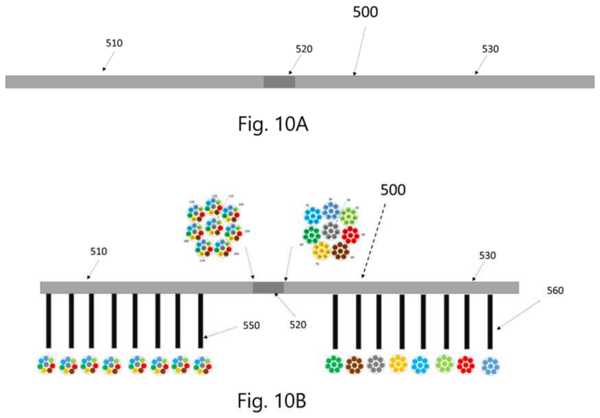

Another application of the CableMesh concept that can be used to connect devices located in multiple racks or zones in the data center is illustrated in Figs. 10A and 10B. In Fig. 10A of this figure, a variant of CableMesh **500,** is installed over a routing system. One section of the cable, either **510** or **530,** is located in the zone of the switches or servers and the transition zone **520** is located around the middle of the cable.

Fig. 10B shows the CableMesh **500** after the cable units are dropped at different locations in the switch or server zones. For example, we can assume that leg **550** is in the server zone whereas **560** is in the switch zone. Each group inside the legs is terminated with multi-fiber connectors, duplex connectors, or simplex connectors. For example, fiber groups in unit **550** are terminated with MPO-8, and fiber groups in unit **560** are terminated with MMC connectors.

We have disclosed novel cable embodiments, that incorporate topologies in the cable structure, tailored to simplify the deployment of customer's networks while improving the reliability of the installation. Although all the CableMesh types shared in this application have *M=100%,* this might not be required for other deployment cases, not shown here, where a range 50% $\leq M \leq 100\%$ might suffice

While exemplary embodiments are described above, it is not intended that these embodiments describe all possible forms of the invention. Rather, the words used in the specification are words of description rather than limitation, and it is understood that various changes may be made without departing from the scope of the invention. Additionally, the features of various implementing embodiments may be combined to form further embodiments of the invention.

## Claims

1. An optical cable (200, 400, 500) comprising a plurality of multi-fiber connectors (310) or adapters wherein the connectors or adapters are configured to connect to network equipment in a data communications network and wherein the optical cable is configured to map near end to far end multi-fiber ports following specific network topologies whereby fiber groups are rearranged in a transition zone (220) of the optical cable such that each of all fibers (11, ..., 18) within one subjacketed group (10) at the near end is routed to multiple independent subjacketed groups (110, ..., 180) at the far end, such that a light path of connected transmitters and receivers are matched to provide optical connections from transmitting fibers to receiving fibers.

2. An optical cable (200, 400, 500) comprising a plurality of Nu subjacketed units (10, ..., 40/80) at a near end of the cable and a plurality of Nu' subjacketed units (110, ..., 180/140) at a far-end of the cable,

   wherein the units contain Ng fiber groups terminated with optical connectors (310) at the near end, and Ng' fiber groups terminated with optical connectors at the far end,
   wherein each fiber group has a number of fibers Nf at the near end and a number of fibers Nf' at the far end,
   wherein a variable structure, located in a transition zone (220) or distributed along the cable, interconnects units from the near end and far end of the cable, interchanging the location of fiber groups among several units,
   wherein the number of units, fiber groups and fibers follow the relationship Nu x Ng x Nf = Nu' x Ng' x Nf', and at least 75% of the near-end and far-end units share at least one fiber group.

3. The optical cable of claim 2, wherein each subjacketed unit has a different length to accommodate different distances to communication equipment.

4. The optical cable of any of claims 2 to 3, further comprising external labels in units and/or fiber groups at the near and far end of the cable to provide interconnection maps of the network to portable devices, wherein the labels are readable by label readers such as laser scanners or cameras of said portable devices, and provide information for installing or maintaining a network.

5. The optical cable of any of claims 2 to 4, wherein the cable is configured to connect to traditional cables to provide a pre-designed fabric topology without the need to implement the topology in patch panels.

6. The optical cable system of any of claims 2 to 5, wherein Nf'=Nf.

7. An optical cable according to claim 1 and according to any of claims 2 to 6.

Fig. 1A

Fig. 1B

Fig. 1C

Fig. 1D

Fig. 2A

Fig. 2B

Fig. 3

Fig. 4A

Fig. 4B

Fig. 5A

Fig. 5B

Fig. 5C

Fig. 6A

Fig. 6B

Fig. 6C

Fig. 7A

Fig. 7B

Fig. 8A

Fig. 8B

Fig. 9A

Fig. 9B

Fig. 10A

Fig. 10B

| Near-end | | Far-end | |
|---|---|---|---|
| Unit | Group | Unit | Group |
| 10 | 11 | 110 | 11 |
| | 12 | | 21 |
| | 13 | | 31 |
| | 14 | | 41 |
| | 15 | 120 | 12 |
| | 16 | | 22 |
| | 17 | | 32 |
| | 18 | | 42 |
| 20 | 21 | 130 | 13 |
| | 22 | | 23 |
| | 23 | | 33 |
| | 24 | | 43 |
| | 25 | 140 | 14 |
| | 26 | | 24 |
| | 27 | | 34 |
| | 28 | | 44 |
| 30 | 31 | 150 | 15 |
| | 32 | | 25 |
| | 33 | | 35 |
| | 34 | | 45 |
| | 35 | 160 | 16 |
| | 36 | | 26 |
| | 37 | | 36 |
| | 38 | | 46 |
| 40 | 41 | 170 | 17 |
| | 42 | | 27 |
| | 43 | | 37 |
| | 44 | | 47 |
| | 45 | 180 | 18 |
| | 46 | | 28 |
| | 47 | | 38 |
| | 48 | | 48 |

Table 1

Fig. 11

| Near-end | | Far-end | |
|---|---|---|---|
| Unit | Group | Unit | Group |
| 10 | 11 | 110 | 11 |
| | 12 | | 21 |
| | 13 | | 31 |
| | 14 | | 41 |
| 20 | 21 | 120 | 12 |
| | 22 | | 22 |
| | 23 | | 32 |
| | 24 | | 42 |
| 30 | 31 | 130 | 13 |
| | 32 | | 23 |
| | 33 | | 33 |
| | 34 | | 43 |
| 40 | 41 | 140 | 14 |
| | 42 | | 24 |
| | 43 | | 34 |
| | 44 | | 44 |

Table 2

Fig. 12

| Near-end | | Far-end | |
|---|---|---|---|
| Unit | Group | Unit | Group |
| 10 | 11 | 110 | 11 |
| | 12 | | 21 |
| | 13 | | 31 |
| | 14 | | 41 |
| | 15 | | 51 |
| | 16 | | 61 |
| | 17 | | 71 |
| | 18 | | 81 |
| 20 | 21 | 120 | 12 |
| | 22 | | 22 |
| | 23 | | 32 |
| | 24 | | 42 |
| | 25 | | 52 |
| | 26 | | 62 |
| | 27 | | 72 |
| | 28 | | 82 |
| 30 | 31 | 130 | 13 |
| | 32 | | 23 |
| | 33 | | 33 |
| | 34 | | 43 |
| | 35 | | 53 |
| | 36 | | 63 |
| | 37 | | 73 |
| | 38 | | 83 |
| 40 | 41 | 140 | 14 |
| | 42 | | 24 |
| | 43 | | 34 |
| | 44 | | 44 |
| | 45 | | 54 |
| | 46 | | 64 |
| | 47 | | 74 |
| | 48 | | 84 |
| 50 | 51 | 150 | 15 |
| | 52 | | 25 |
| | 53 | | 35 |
| | 54 | | 45 |
| | 55 | | 55 |
| | 56 | | 65 |
| | 57 | | 75 |
| | 58 | | 85 |
| 60 | 61 | 160 | 16 |
| | 62 | | 26 |
| | 63 | | 36 |
| | 64 | | 46 |
| | 65 | | 56 |
| | 66 | | 66 |
| | 67 | | 76 |
| | 68 | | 86 |
| 70 | 71 | 170 | 17 |
| | 72 | | 27 |
| | 73 | | 37 |
| | 74 | | 47 |
| | 75 | | 57 |
| | 76 | | 67 |
| | 77 | | 77 |
| | 78 | | 87 |
| 80 | 81 | 180 | 18 |
| | 82 | | 28 |
| | 83 | | 38 |
| | 84 | | 48 |
| | 85 | | 58 |
| | 86 | | 68 |
| | 87 | | 78 |
| | 88 | | 88 |

Table 3

Fig. 13

Europäisches
Patentamt

European
Patent Office

Office européen
des brevets

## EUROPEAN SEARCH REPORT

**Application Number**

EP 25 21 2659

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/057592 A1 (WU QI [US]) 24 February 2022 (2022-02-24) * paragraphs [0013], [0014], [0043], [0071], [0077] * * figures 7-9, 14, 18 * ----- | 1-7 | INV. G02B6/44 |
| X | US 2015/230007 A1 (HESSONG DAVID JOSEPH [US] ET AL) 13 August 2015 (2015-08-13) * paragraphs [0009], [0029] - [0031] * * figure 2 * ----- | 1-7 | |
| X | US 2003/031436 A1 (SIMMONS RICHARD L [US] ET AL) 13 February 2003 (2003-02-13) * figures 1, 6 * ----- | 1-7 | |
| X | US 2022/141082 A1 (BRUN QUENTIN [FR] ET AL) 5 May 2022 (2022-05-05) * paragraphs [0191], [0202], [0210] * * figures 24, 28, 29 * ----- | 1-7 | |
| | | | **TECHNICAL FIELDS SEARCHED (IPC)** G02B |

The present search report has been drawn up for all claims

| Place of search | Date of completion of the search | Examiner |
|---|---|---|
| The Hague | 26 March 2026 | Hohmann, Leander |

EPO FORM 1503 03.82 (P04C01)

## ANNEX TO THE EUROPEAN SEARCH REPORT
## ON EUROPEAN PATENT APPLICATION NO.

EP 25 21 2659

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2026

| Patent document cited in search report | Publication date | Patent family member(s) | Publication date |
|---|---|---|---|
| US 2022057592 A1 | 24-02-2022 | EP 3973341 A1<br>US 10678012 B1<br>US 2022057592 A1<br>WO 2020236404 A1 | 30-03-2022<br>09-06-2020<br>24-02-2022<br>26-11-2020 |
| US 2015230007 A1 | 13-08-2015 | NONE | |
| US 2003031436 A1 | 13-02-2003 | AU 2002320489 A1<br>EP 1462836 A2<br>KR 20040023736 A<br>US 2003031436 A1<br>US 2003031437 A1<br>US 2003031452 A1 | 03-03-2003<br>29-09-2004<br>18-03-2004<br>13-02-2003<br>13-02-2003<br>13-02-2003 |
| US 2022141082 A1 | 05-05-2022 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20230333952 A1

- US 20230401400 A1